# EUROPEAN PATENT APPLICATION

(11) **EP 4 239 650 A1**
(43) Date of publication of application: **06.09.2023**
(21) Application number: 22159949.1
(22) Date of filing: 03.03.2022
(51) Int. Cl.: G21C 3/32, G21C 3/33

(54) **A FILTER FOR SEPARATING PARTICLES FROM A COOLING LIQUID IN A NUCLEAR POWER PLANT, A FILTER ARRANGEMENT AND A FUEL ASSEMBLY**

(71) Applicant: Westinghouse Electric Sweden AB, 721 63 Västerås (SE)
(72) Inventor: WALDEMARSSON, Fredrik, Västerås (SE)
(74) Representative: Bjerkén Hynell KB

(57) **Abstract**

A filter (1, 1', 1", 1‴) for separating particles from a cooling liquid in a nuclear power plant is described. The filter (1, 1', 1", 1‴) comprises a filter frame (3, 3', 3", 3‴) configured to cooperate with a mounting part (5, 5', 5", 5‴) of a component (7) of the nuclear power plant for mounting of the filter (1, 1', 1", 1‴) in the component (7).The filter frame (3, 3', 3", 3"') comprises at least one protruding part (9, 9', 9") and/or at least one recess (11) extending along an extension direction (e, e') substantially perpendicular to a plane (p) extending along a surface portion (13) of an outer surface of the filter frame (3, 3', 3", 3‴). The at least one protruding part (9, 9', 9") and/or at least one recess (11) are arranged along the entire circumference of the filter frame (3, 3', 3", 3‴) along an outer edge (15) of the filter frame (3, 3', 3", 3"'). A filter arrangement and a fuel assembly are also described.

## Description

### TECHNICAL FIELD

The present disclosure relates to a filter for separating particles from a cooling liquid in a nuclear power plant. Further, the present disclosure relates to a filter arrangement and to a fuel assembly.

### BACKGROUND

In a nuclear power plant, for example BWR, PWR or VVER, it is important to filter the cooling liquid, such as cooling water, since debris or other particles that may be transported by the cooling water can cause defects to the cladding of the fuel rods. Defects to the cladding of the fuel rods may result in nuclear fuel, i.e. uranium, leaking into the cooling water. A larger defect may cause the operation of the reactor to be interrupted to replace the failed fuel. Such a replacement is time-consuming and expensive. Debris and other particles may also cause defects to other components in a nuclear power plant, for instance pumps. The debris may consist of metal chips or wires, which are formed, for example, during repairs of components in the plant. The debris may also have reached the power plant from the outside.

In JP4005891 B2 an example of a filter for a nuclear plant is described. The filter is arranged to prevent debris to flow into a coolant passage and the filter is welded into a tie plate of a fuel assembly. Improvements regarding welding of the filter are depicted in the document.

Although the currently used filters work well it is desirable to provide an improved filter, in which the filter is arranged to decrease the flow of a cooling liquid in a passage between the filter and a mounting structure configured for mounting of the filter. Further, it is desirable to provide a filter configured to make it difficult for debris and particles to flow through a passage between the filter and the mounting structure. It is also desirable to provide a filter that can be assembled and disassembled in a simple manner.

### SUMMARY

It is an object of the present disclosure to overcome, or at least alleviate, at least some of the above-mentioned drawbacks and problems. The object is achieved by the subject matter defined according to the independed claims.

Thus, the object of the present disclosure is achieved by a filter for separating particles from a cooling liquid in a nuclear power plant. The filter comprises a filter frame configured to cooperate with a mounting part of a component of the nuclear power plant for mounting of the filter in the component. Thus, the filter frame is adapted, by the form and the dimensions of the filter frame, to enable positioning of the filter frame in the mounting part for mounting of the filter in the mounting part of the component of a nuclear power plant. The filter is configured for separating particles from a cooling liquid in a nuclear power plant which implies that the mounting part is a part of a component adapted for the cooling liquid to flow through the component and past the mounting part. For example, the component may be a portion of a channel for the cooling liquid in a nuclear power plant.

The filter frame comprises at least one protruding part and/or at least one recess extending along an extension direction substantially perpendicular to a plane extending along a surface portion of an outer surface of the filter frame. The at least one protruding part and/or at least one recess are arranged along the entire circumference of the filter frame along an outer edge of the filter frame.

The surface portion of the outer surface of the filter frame is comprised in the plane. The at least one protruding part and/or at least one recess extend from the surface portion along the extension direction substantially perpendicular to the plane. Thus, the at least one protruding part and/or at least one recess are arranged substantially perpendicular to the surface portion of the outer surface of the filter frame.

Further, the at least one protruding part and/or at least one recess are arranged along the entire circumference of the filter frame. For example, a filter frame having form of a cuboid, i.e. a rectangular cuboid, has two bottom plates and four side plates and thereby two outer edges of the two bottom plates. The outer edges are created by sub-edges formed at the connections between the bottom plates and the side plates. With the circumference of the filter frame is then meant the entire edge of each of the bottom plates. The filter frame is intended to cooperate with the mounting part along the entire circumference of the filter frame. Thus, the circumference of the filter frame is defined, depending on the positioning of the filter frame at the mounting part, along the parts of the filter frame cooperating with the mounting part of the component of a nuclear power plant.

Because the filter frame comprises at least one protruding part and/or at least one recess extending along the extension direction substantially perpendicular to the plane extending along the surface portion of the outer surface of the filter frame and because the at least one protruding part and/or the at least one recess are arranged along the entire circumference of the filter frame along the outer edge of the filter frame, an additional curvature will be formed in the space between the outer surface of the filter frame and a surface of the mounting part, when the filter has been mounted in the mounting part, which curvature, i.e. a labyrinth like channel with several curves, creates an obstacle for debris or particles trying to flow between the filter frame and the mounting part across the at least one protruding part and/or at least one recess. Debris or particles can then get stuck at the curvature in the labyrinth like channel in the space between the filter frame and the mounting part. Thus, the at least one protruding part and/or at least one recess will act as a sealing for debris or particles when the filter has been assembled, i.e. when the filter has been mounted in the mounting part.

Consequently, an improved filter is provided, having conditions to, in use of the filter, decrease the flow of a cooling liquid between the filter and the mounting part because of the labyrinth like channel. Decreased flow of the cooling liquid implies a lower number of debris or particles flowing in the cooling liquid. Further, the labyrinth like channel will make it difficult for debris or particles to flow through the space between the filter and the mounting part. Thus, an improved filter is provided with improved protection characteristics against debris and particles comparing to known filters, particularly having improved conditions to prevent debris or particles to flow through a space between the filter frame and the mounting portion. Further, an improved filter is provided having conditions for effective assembling and disassembling of the filter because welding around the entire circumference of the filter to seal the gap between the filter frame and mounting part is not needed and assembling of the filter is facilitated because the at least one the at least one protruding part and/or at least one recess. Yet further, positioning of the filter in a desired position in relation to the mounting part is facilitated because of the at least one protruding part and/or at least one recess. Thereby, the above object is achieved.

Optionally, the at least one protruding part and/or the at least one recess comprise a first portion arranged at the surface portion of the outer surface of the filter frame and a second portion extending from the first portion along the extension direction, wherein the first portion has a greater dimension than the second portion measured at least in a direction perpendicular to the extension direction. Thus, a complex curvature is achieved improving the protection characteristics against debris and particles trying to flow in the space between the filter frame and the mounting part. Because the first portion has a greater dimension than the second portion measured at least in a direction perpendicular to the extension direction, the first portion may be wider than the second portion. The first portion may also be longer or shorter than the second portion measured along the extension direction.

Optionally, the filter frame comprises at least two protruding parts and/or at least two recesses arranged parallel to each other. Thus, a further improved obstacle for debris or particles will be provided when the filter has been mounted in the mounting part.

Optionally, the at least two protruding parts and/or at least two recesses have a similar form and similar dimensions. Thus, manufacturing of the filter can be facilitated.

Optionally, the at least one protruding part and/or at least one recess has a height and respective depth measured along the extension direction, wherein the height and respective depth vary along the circumference of the filter frame, preferably forming a sinus- or zigzag-pattern of the at least one protruding part and/or at least one recess along the circumference of the filter frame. As a result, a further curvature will be created between the filter frame and the mounting part by the at least one protruding part and/or at least one recess along the entire circumference of the filter frame and along an outer edge of the filter frame when the filter frame has been mounted in the mounting part. Thus, a three-dimensional curvature and thereby a three-dimensional obstacle is provided which results in a further improved obstacle for debris or particles trying to flow between the filter frame and the mounting part across at least one protruding part and/or at least one recess and along at least one protruding part and/or at least one recess. Consequently, a further improved filter is provided.

Optionally, the extension direction is parallel to an intended direction of cooling liquid flowing through the filter. Thus, the at least one protruding part and/or at least one recess can be arranged parallel to the intended direction of the cooling liquid flowing through the filter, for example, the at least one protruding part and/or at least one recess can be arranged at a bottom of the filter. As an alternative, the extension direction may be perpendicular to the intended direction of the cooling liquid flowing through the filter. Thus, the at least one protruding part and/or at least one recess can be arranged perpendicular to the intended direction of the cooling liquid flowing through the filter, for example, the at least one protruding part and/or at least one recess can be arranged at a side of the filter frame. The bottom and side of the filter refers herein to an intended mounting position of the filter in relation the mounting part. The orientation of the filter frame in relation to the mounting part may vary depending on where in the nuclear power plant the filter is intended to be mounted.

Optionally, a distal end of the at least one protruding part and/or at least one recess comprises an end surface arranged substantially perpendicular to the extension direction, wherein the end surface is provided with at least one groove and/or at least one ridge. Thus, a further improved obstacle for debris or particles is provided and thereby a further improved filter is achieved.

Optionally, the component of the nuclear power plant is a part of a fuel assembly of a reactor of the nuclear power plant. Particularly, the component is an inlet part to the fuel assembly. Thus, the filter can be used to filter a cooling liquid for a fuel assembly in a reactor core of the nuclear power plant.

Further the object is achieved by a filter arrangement configured to be positioned in a nuclear power plant, wherein the filter arrangement comprises a mounting part of a component of the nuclear power plant and a filter according to any of the embodiments described herein. The mounting part comprises at least one further recess and/or at least one further protruding part arranged respective to receive the at least one protruding part of the filter frame and/or to be inserted into the at least one recess of the filter frame.

The form of the at least one further recess and at least one further protruding part of the mounting part correspond to the form of respective at least one protruding part and at least one recess of the filter frame to enable positioning of the at least one protruding part and/or the at least one recess of the filter frame in the corresponding at least one further recess and/or to receive the corresponding at least one further protruding part of the mounting part for mounting of the filter in the mounting part.

The filter of the filter arrangement has corresponding characteristics of the filter described above. The filter with the mounting part of a component of the nuclear power plant form a filter arrangement, i.e. a unit comprising the filter and the mounting part connected to each other. The unit can be installed in the nuclear power plant.

One effect of the filter arrangement is that an additional curvature is formed in the space between the outer surface of the filter frame and a surface of the mounting part, which curvature, i.e. a labyrinth like channel with several curves, creates an obstacle for debris or particles trying to flow between the filter frame and the mounting par across the at least one protruding part and/or at least one recess. Debris or particles can then get stuck at the curvature in the space between the filter frame and the mounting part. Thus, the at least one protruding part and/or at least one recess with corresponding at least further recess and/or at least one further protruding part will act as a sealing for debris or particles when the filter arrangement has been assembled, i.e. when the filter has been mounted in the mounting part

Consequently, an improved filter arrangement is provided having improved protection characteristics against debris and particles comparing to known filter arrangements, particularly having improved conditions to prevent debris or particles to flow through a space between the filter frame and the mounting portion. Further, an improved filter arrangement is provided having conditions for effective assembling and disassembling of the filter arrangement. Yet further, positioning of the filter in a desired position in relation to the mounting part is facilitated by the at least one protruding part and/or at least one recess and corresponding at least one further recess and/or at least one further protruding part. Thereby, the above object is achieved.

Optionally, the at least one further recess and/or at least one further protruding part has a further depth and respective further height measured along a further extension direction of the at least one further recess and/or at least one further protruding part, wherein the further depth and respective further height vary along a circumference of the mounting part, preferably forming a sinus- or zigzag-pattern of the at least one further recess and/or at least one further protruding part corresponding to the sinus-or zigzag-pattern of the at least one protruding part and/or at least one recess of the filter frame. As a result, a further curvature is created between the filter frame and the mounting part along the entire circumference of the filter. Thus, a tree-dimensional curvature and thereby a tree-dimensional obstacle is provided which results in a yet improved obstacle for debris or particles trying to flow between the filter frame and the mounting part across at least one protruding part and/or at least one recess and along at least one protruding part and/or at least one recess. Consequently, a yet improved filter arrangement is provided.

Optionally, the component of the nuclear power plant is a part of a fuel assembly of a reactor of the nuclear power plant. Particularly, the component is an inlet part to the fuel assembly. Thus, the filter arrangement can be placed in a fuel assembly and the filter can be used to filter a cooling liquid for the fuel assembly.

Optionally, a further distal end of the at least one further recess and/or of the further protruding part of the mounting part comprises a further end surface arranged substantially perpendicular to the further extension direction, wherein the further end surface is provided with at least one further groove and/or at least one further ridge. Thus, a yet improved obstacle for debris or particles is provided and thereby a yet improve filter arrangement is achieved.

Yet further, the object is achieved by a fuel assembly comprising a filter arrangement according to some embodiments described herein. Because the fuel assembly comprises an improved filter arrangement an improved fuel assembly is provided. Thereby, the above object is achieved.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig.1 illustrates a view from above of a schematic filter arrangement,
Fig.2 illustrates a cut view of the filter arrangement illustrated in Fig. 1 according to an embodiment,
Fig. 3 illustrates a cut view of a filter arrangement according to a further embodiment,
Fig. 4 illustrates a cut view of a portion of a filter arrangement according to yet further embodiment,
Fig. 5 illustrates a cut view of a portion of a filter arrangement according to another embodiment,
Fig. 6 illustrates a further cut view of a portion of a filter arrangement according to some embodiments,
Fig. 7 illustrates a cut view of a schematic fuel assembly for a BWR reactor comprising a filter arrangement according to an embodiment.

### DETAILED DESCRIPTION

Aspects of the present invention will now be described more fully. Like numbers refer to like elements throughout. Well-known functions or constructions will not necessarily be described in detail for brevity and/or clarity.

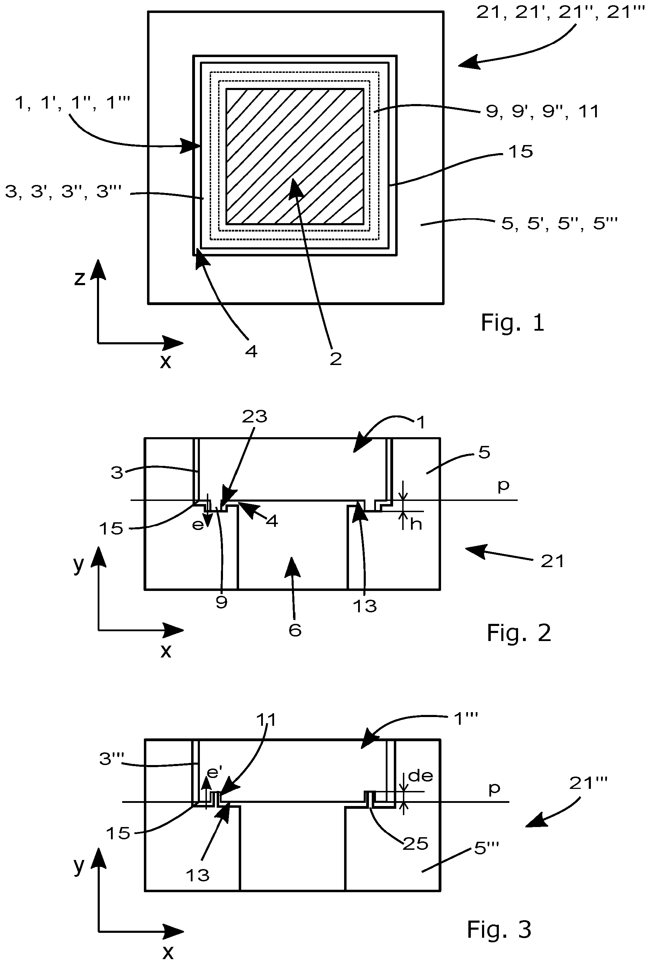

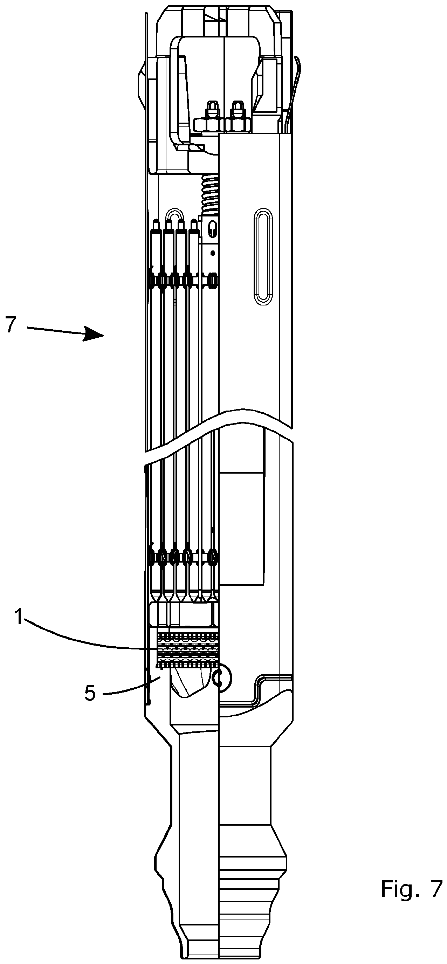

Fig. 1 illustrates a view from above of a schematic filter arrangement 21, 21', 21", 21‴ configured to be positioned in a nuclear power plant. The filter arrangement 21, 21', 21", 21‴ comprises a mounting part 5, 5', 5", 5'" of a component 7 of the nuclear power plant and a filter 1, 1', 1", 1‴ according to some embodiments. The component 7 may for example be a part of a fuel assembly and an example of a fuel assembly, namely a fuel assembly for a BWR reactor, is illustrated in Fig. 7.

The filter 1, 1', 1", 1‴ is arranged for separating particles from a cooling liquid in a nuclear power plant. The filter 1, 1', 1", 1‴ comprises a filter frame 3, 3', 3", 3‴ configured to cooperate with the mounting part 5, 5', 5", 5‴ of the component 7 of the nuclear power plant for mounting of the filter 1, 1', 1", 1‴ in the component 7. The filter 1, 1', 1", 1‴ comprises a filter part 2 arranged in the frame 3, 3', 3", 3‴. Between the filter frame 3, 3', 3", 3‴ and the mounting part 5, 5', 5", 5‴ there is a space 4, forming a tight channel through which the cooling liquid may flow. It is desirable limit the flow of cooling liquid through the space 4 and catch debris or particles trying to flow through. The distance between the filter frame 3, 3', 3", 3‴ and the mounting part 5, 5', 5", 5‴ is minimized during design and fabrication of the components to get the tightest fit possible. However, due to limitations from manufacturing tolerances, e.g. on flatness of the component surfaces, the distance between them may vary for example up to around 0.3 mm. Thus, thin pieces of debris, such as wires or similar with a diameter less than 0.3 mm can flow through the space 4. The main stream of the cooling liquid flows through a passage 6, illustrated in Fig. 2.

The filter frame 3, 3', 3", 3‴ comprises at least one protruding part 9, 9', 9" (illustrated schematic with the dashed lines) and/or at least one recess 11 (illustrated schematic with the dashed lines) extending along an extension direction e, e' substantially perpendicular to a plane p extending along a surface portion 13 of an outer surface of the filter frame 3, 3', 3", 3‴. The plane p, the surface portion 13 and the extension direction e, e' are illustrated in Fig. 2 and Fig. 3.

The at least one protruding part 9, 9', 9" and/or at least one recess 11 are arranged along the entire circumference of the filter frame 3, 3', 3", 3‴ along an outer edge 15 of the filter frame 3, 3', 3", 3‴.

Fig. 2 illustrates a cut view of the filter arrangement 21 illustrated in Fig. 1 according to an embodiment. The filter arrangement 21 comprises a filter 1 with a frame 3 comprising a protruding part 9. According to the embodiments illustrated in Fig. 2, the protruding part 9 is arranged as a single protruding part 9 arranged to be inserted in a further recess 23 of the mounting part 5 for mounting of the filter 1 in the mounting part 5. The height h of the protruding part may be in a range, for example between 5-10 mm. Thus, the corresponding further recess 23 has a corresponding depth.

Fig.3 illustrates a cut view of a filter arrangement 21‴ according to a further embodiment. The filter arrangement 21‴ comprises a filter 1‴ with a frame 3'" comprising a recess 11. According to the embodiments illustrated in Fig. 3, the recess 11 is arranged as a single recess 11 arranged to receive a further protruding part 25 of the mounting part 5‴ for mounting of the filter 1‴ in the mounting part 5‴. The recess 11 has a depth de, that may be in a range, for example between 5-10 mm. Thus, the corresponding further protruding part 25 has a corresponding height.

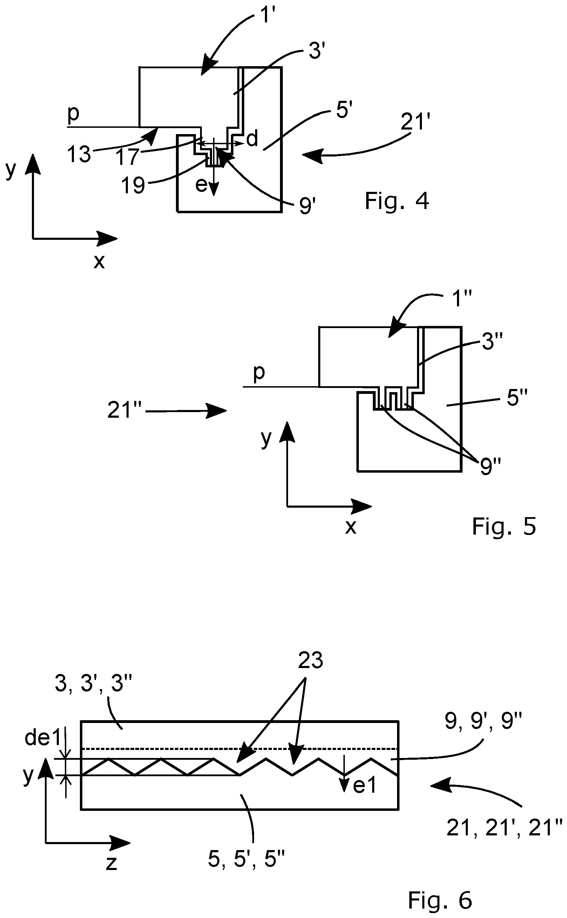

Fig. 4 illustrates a cut view of a portion of a filter arrangement 21' according to a yet further embodiment. According to the embodiments illustrated in Fig. 4, the at least one protruding part 9' comprises a first portion 17 arranged at the surface portion 13 of the outer surface of the filter frame 3' and a second portion 19 extending from the first portion 17 along the extension direction e. The first portion 17 has a greater dimension than the second portion 19 measured in a direction d perpendicular to the extension direction e. Thus, the first portion 17 may be wider than the second portion 19. According to some embodiments the first portion 17 may be longer or shorter than the second portion 19 measured along the extension direction e.

Fig. 5 illustrates a cut view of a portion of a filter arrangement 21" according to another embodiment. According to the embodiments illustrated in Fig. 5, the filter frame 3" comprises two protruding parts 9" arranged parallel to each other. The two protruding parts 9" has a similar form and similar dimensions which facilitates manufacturing of the filter 1". The two protruding parts 9" are arranged to be inserted in corresponding further recesses of the mounting part 5". As an alternative (not shown) the filter frame may comprise one protruding part and one recess and the mounting part may comprise corresponding one further recess and one further protruding part.

Fig. 6 illustrates a further cut view of a portion of a filter arrangement 21, 21', 21ʺaccording to some embodiments. According to the embodiments illustrated in Fig. 6 the filter frame 3, 3', 3" comprises at least one protruding part 9, 9', 9" and the mounting part 5, 5', 5" comprises at least one further recess 23 arranged to receive said at least one protruding part 9, 9', 9". However, the filter frame may comprise a recess and the mounting part may comprise a further protruding part arranged to be inserted in the recess of the frame. As an alternative (not shown) the frame may comprise at least one protruding part and at least one recess along the circumference of the frame, which means that along the circumference of the frame there may be a section or sections with at least one protruding part and a section or sections with at least one recess. The mounting part is then arranged in corresponding way regarding the at least one further recess and the at least one further protruding part.

As illustrated in Fig. 6, the at least one further recess 23 has a further depth de1 measured along a further extension direction e1 of the at least one further recess 23, wherein the further depth d1 varies along a circumference (not shown but corresponds to the circumference of the filter frame) of the mounting part 5, 5', 5", preferably forming a zigzag-pattern of the at least one further recess 23, which corresponds to the zigzag-pattern of the at least one protruding part 9, 9', 9" to enable connection of the filter frame to the mounting part.

Through the example embodiments depicted in the disclosure the extension directions e, e', e1 are parallel to an intended direction of the cooling liquid flowing through the passage 6 and through the filter 1, 1', 1", 1‴. However, the extension directions e, e', e1 may be perpendicular to an intended direction of the cooling liquid flowing through the passage 6 and through the filter 1, 1′, 1", 1‴.

Fig. 7 illustrates a cut view of a schematic fuel assembly 7 for a BWR reactor comprising a filter 1 according to an embodiment. The filter 1 is mounted in a mounting part 5 of an inlet part to the fuel assembly 7. According to some embodiments, the fuel assembly 7 may be a fuel assembly for a PWR or VVER reactor or another reactor type.

## Claims

1. A filter (1, 1', 1", 1‴) for separating particles from a cooling liquid in a nuclear power plant, wherein the filter (1, 1', 1", 1‴) comprises a filter frame (3, 3', 3", 3‴) configured to cooperate with a mounting part (5, 5', 5", 5‴) of a component (7) of the nuclear power plant for mounting of the filter (1, 1', 1", 1‴) in the component (7), **characterized in that**
the filter frame (3, 3', 3", 3‴) comprises at least one protruding part (9, 9', 9") and/or at least one recess (11) extending along an extension direction (e, e') substantially perpendicular to a plane (p) extending along a surface portion (13) of an outer surface of the filter frame (3, 3', 3", 3‴),
wherein the at least one protruding part (9, 9', 9") and/or at least one recess (11) are arranged along the entire circumference of the filter frame (3, 3', 3", 3‴) along an outer edge (15) of the filter frame (3, 3', 3", 3‴).

2. The filter (1') according to claim 1, wherein the at least one protruding part (9') and/or the at least one recess (11) comprise a first portion (17) arranged at the surface portion (13) of the outer surface of the filter frame (3') and a second portion (19) extending from the first portion (17) along the extension direction (e), wherein the first portion (17) has a greater dimension than the second portion (19) measured at least in a direction (d) perpendicular to the extension direction (e).

3. The filter (1") according to claim 1 or 2, wherein the filter frame (3") comprises at least two protruding parts (9") and/or at least two recesses arranged parallel to each other.

4. The filter (1") according to claim 3, wherein the at least two protruding parts (9") and/or at least two recesses have a similar form and similar dimensions.

5. The filter (1, 1', 1", 1‴) according to any of the preceding claims, wherein the at least one protruding part (9, 9', 9") and/or at least one recess (11) has a height (h) and respective depth (de) measured along said extension direction (e, e'), wherein the height (h) and depth (de) respectively vary along the circumference of the filter frame (3, 3', 3", 3‴), preferably forming a sinus- or zigzag-pattern of the at least one protruding part (9, 9', 9") and/or at least one recess (11) along the circumference of the filter frame (3, 3', 3", 3‴).

6. The filter (1, 1', 1", 1‴) according to any of the preceding claims, wherein the extension direction (e, e') is parallel to an intended direction of cooling liquid flowing through the filter (1, 1′, 1", 1‴).

7. The filter (1, 1', 1", 1‴) according to any one of the preceding claims, wherein the component (7) of the nuclear power plant is a part of a fuel assembly of a reactor of the nuclear power plant.

8. A filter arrangement (21, 21', 21", 21‴) configured to be positioned in a nuclear power plant, wherein the filter arrangement (21, 21', 21", 21‴) comprises a mounting part (5, 5', 5", 5‴) of a component (7) of the nuclear power plant and a filter (1, 1', 1", 1‴) according to any of claims 1 to 7, wherein the mounting part (5, 5', 5", 5‴) comprises at least one further recess (23) and/or at least one further protruding part arranged respective to receive the at least one protruding part (9, 9', 9") of the filter frame (3, 3', 3", 3‴) and/or to be inserted into the at least one recess (11) of the filter frame (3, 3', 3", 3‴).

9. The filter arrangement (21, 21', 21", 21‴) according to claim 8 with a filter (1, 1', 1", 1‴) according to any of claims 5 to 7, wherein the at least one further recess (23) and/or at least one further protruding part has a further depth (de1) and respective further height measured along a further extension direction (e1) of the at least one further recess (23) and/or at least one further protruding part, wherein the further depth (d1) and respective further height vary along a circumference of the mounting part (5, 5', 5", 5‴), preferably forming a sinus- or zigzag-pattern of the at least one further recess (23) and/or at least one further protruding part corresponding to the sinus-or zigzag-pattern of the at least one protruding part (9, 9', 9") and/or at least one recess (11) of the filter frame (3, 3', 3", 3‴).

10. The filter arrangement (21, 21', 21ʺ, 21‴) according to claim 8 or 9, wherein the component (7) of the nuclear power plant is a part of a fuel assembly of a reactor of the nuclear power plant.

11. A fuel assembly (7) comprising a filter arrangement (21, 21', 21", 21‴) according to any of claims 8 to 10.
